Europäisches Patentamt

European Patent Office

Office européen des brevets

(19)

(11) Publication number: **0 074 450**
A1

## (12) EUROPEAN PATENT APPLICATION

(21) Application number: 81304812.1

(22) Date of filing: 15.10.81

(51) Int. Cl.³: **C 08 L 27/06**
C 08 K 3/04, H 01 B 1/24
//G11B3/70

(30) Priority: 08.09.81 US 299902

(43) Date of publication of application:
23.03.83 Bulletin 83/12

(84) Designated Contracting States:
DE FR GB IT

(71) Applicant: TENNECO CHEMICALS INC
Park 80 Plaza West-1
Saddle Brook, New Jersey 07662(US)

(72) Inventor: Rosen, Milton K.
R.D.8 Flemington
New Jersey(US)

(72) Inventor: Merkel, Richard R.
8 Parker Court Florham Park
New Jersey(US)

(74) Representative: Oliver, Roy Edward et al,
POLLAK,MERCER & TENCH High Holborn House 52-54
High Holborn
London WC1V 6RY(GB)

(54) Conductive moulding compositions containing copolymers of vinyl chloride and long chain alpha-olefins.

(57) Conductive moulding compositions comprise a vinyl chloride—α-olefin copolymer which contains from 0.1% to 5% by weight of an α-olefin having 10 to 22 carbon atoms, conductive carbon black particles, a stabilizer component, a lubricant component, and a plasticizer and processing aid component.

EP 0 074 450 A1

# CONDUCTIVE MOULDING COMPOSITIONS CONTAINING COPOLYMERS OF VINYL CHLORIDE AND LONG CHAIN α-OLEFINS

## DESCRIPTION

This invention relates to conductive molding compositions. More particularly, it relates to conductive molding compositions having excellent processing characteristics from which molded articles having good dimensional stability and thermal stability and other valuable properties can be made.

## Background of the Invention

Clemens in U.S. patent No. 3,842,194 described a capacitance video disc system in which the disc, which was made of a thermoplastic material that was a vinyl resin, had a conductive metal coating to provide the conductivity required for capacitative pickup and a dielectric material thereover. An electrode on the playback stylus completed the capacitor.

Improvements in this system in which the disc is made from a conductive thermoplastic material have been disclosed. Khanna in U.S. patent No. 3,960,790 taught a method of making disc record molding compositions by compounding a vinyl chloride-vinyl acetate copolymer and a vinyl chloride homopolymer with carbon black, a stabilizer, a plasticizer, an antistatic agent, and a mold release agent in a series of blending steps that included successive increases in temperature. In U.S. patent No. 4,129,536, Martin et al. disclosed injection molding compositions that comprised a vinyl chloride-propylene copolymer or polyvinyl chloride, a solid mercaptotin stabilizer, an acrylic resin processing aid, and an ester wax lubricant and the use of these compositions in the production of video discs. Molding compositions suitable for use in the compression molding of video discs that contained a vinyl chloride-vinyl acetate copolymer, a vinyl chloride-maleate ester copolymer, a vinyl chloride-propylene copolymer, conductive carbon black particles, polymeric plasticizers and processing aids, two or more metal stabilizers, and three or more lubricants were disclosed by Khanna in U.S. patent No. 4,151,132. While the molding compositions of Khanna are readily processable and moldable to form video discs having excellent playback characteristics, they are not entirely satisfactory because they have a relatively low heat distortion temperature, which results in warpage and shrinkage when the discs are stored at temperatures above 37°C. Molding compositions said to have improved dimensional stability at 54°C., homogeneity, and surface characteristics were disclosed by Martin et al. in U.S. patent No. 4,228,050. These compositions comprised polyvinyl chloride or a vinyl chloride-propylene copolymer having a heat distortion temperature of 60°C. or higher, conductive carbon black particles, stabilizers, lubricants, plasticizers, and processing aids, with the proviso that not more than about 5% by weight of liquid additives that are compatible with the vinyl chloride resin are present.

While all of the conductive molding compositions of the prior art can be used to form video discs, none of them meets all of the requirements that have been established for compositions that are to be used in this application, that is, good processability and thermal stability during compound processing and molding, good conductivity, good replication of submicron size surface relief patterns, and dimensional stability on storage under various environmental conditions.

Summary of the Invention

Conductive injection molding compositions that have excellent processing characteristics and thermal stability, high distortion temperatures, and other desirable properties comprise a vinyl chloride— $\alpha$-olefin copolymer containing from 0.1% to 5% by weight of a long chain $\alpha$-olefin, conductive carbon black particles, a stabilizer component, a lubricant component, and a plasticizer and processing aid component.

Detailed Description of the Invention

In accordance with this invention, it has been found that conductive molding compositions that meet the requirements that have been established for compositions that are to be used in the production of video discs result when the vinyl chloride homopolymers or vinyl chloride-propylene copolymers that are used in the preparation of molding compositions disclosed by Martin et al. in U.S. patent No. 4,228,050 and by Datta in U.S. patent No. 4,275,100 are replaced by a copolymer of vinyl chloride and a long chain $\alpha$-olefin. The conductive molding compositions that contain these copolymers are easily processed materials that are characterized by improved melt viscosity and thermal stability, as compared to those that contain vinyl chloride homopolymers or vinyl chloride-propylene copolymers of the same relative viscosity, and by excellent dimensional stability, homogeneity, and surface characteristics.

The vinyl halide resins that are used in the preparation of the conductive molding compositions of this invention are vinyl chloride copolymers that contain from 0.1% to 5% by weight of a comonomer that is an $\alpha$-olefin having 10 to 22 carbon atoms, for example, decene-1, isodecene-1, dodecene-1, neodecene-1, tetradecene-1, pentadecene-1, hexadecene-1, heptadecene-1, octadecene-1, eicosene-1, docosene-1, and mixtures thereof. The copolymers preferably contain from 1% to 4% by weight of an $\alpha$-olefin having 16 to 18 carbon atoms or a mixture of these olefins. These copolymers may be prepared by any of the well-known emulsion or suspension polymerization procedures. For example, they may be prepared by a suspension polymerization process in an aqueous system using a free radical-generating polymerization initiator and a suspending agent such as methylcellulose or polyvinyl alcohol. The preparation and properties of these vinyl chloride copolymers were disclosed in detail by Farber and Koral in U.S. patent No. 3,560,462, which is incorporated herein by reference.

These copolymers may be used alone or in combination with other vinyl halide resins in the conductive molding compositions of this invention.

The conductive carbon black particles, the stabilizer components, the lubricant components, and the plasticizer and processing aid components that are used in the production of the conductive molding compositions of this invention include those that were disclosed by Martin et al. in U.S. patent No. 4,228,050 and by Datta in U.S. patent No. 4,275,100, which are incorporated herein by reference.

The carbon black particles that are suitable for use in the products of this invention are highly electrically-conductive, finely-divided carbon blacks that have a low bulk density. A preferred carbon black is Armak Co.'s Ketjenblack EC, which has an apparent bulk density of about 140 to 160 grams per liter and an average particle size of about 300 angstroms. These carbon black particles have a high surface area and a large proportion of voids within the particles, as measured by dibutyl phthalate absorption, which enables current to flow between the conductive particles in a non-conductive polymer matrix in a highly efficient manner. Other carbon blacks can be used instead of or in combination with Ketjenblack EC provided that they meet the electrical requirements.

The amount of conductive carbon black that is used in the molding compositions of this invention is that necessary to reduce their bulk resistivity to less than about 500 ohm—centimeters at 900 megahertz, preferably to less than 100 ohm—centimeters at 900 megahertz.  In
most cases, the conductive molding compositions contain
from 12% to 20% by weight of conductive carbon black
particles.  They preferably contain from 14% to 16% by
weight of conductive carbon black particles.

In addition to the vinyl chloride copolymer and the
conductive carbon black, the conductive molding compositions
contain from 1.5% to 4% by weight of a stabilizer component,
from 0.5% to 5% by weight of a lubricant component, and up
to 10% by weight of a plasticizer and processing aid component.  They preferably contain from 2% to 3% by weight of
a stabilizer component, from 1% to 3% by weight of a
lubricant component, and up to 6% by weight of a plasticizer and processing aid component.  They generally contain
not more than 5% by weight of liquid additives and not more
than 10% by weight of solid additives.

The stabilizer component of the conductive molding
compositions comprises one or more stabilizers that have
low volatility at temperatures up to 200°C.  Suitable
stabilizers include organotin compounds such as dibutyltin
mercaptopropionate, dibutyl maleate, and the like and
carboxylates of barium, cadmium, lead, and zinc such as
barium stearate, cadmium stearate, lead stearate, zinc
stearate, barium 2-ethylhexanoate, zinc 2-ethylhexanoate,
and the like and mixtures thereof.  Epoxidized vegetable
oils, organic phosphites, calcium stearate, and alkylated
phenols such as tert.butylcatechol may also be present.
The preferred stabilizer components comprise a mixture of
organotin compounds, for example, dibutyltin mercaptopropionate and dibutyltin maleate.

The lubricant component contains materials that
provide both internal and external lubrication during
compounding and molding.  It improves the melt flow
characteristics of the molding compositions and provides
good release of the molded articles from the mold.  Useful lubricants include fatty acids, esters of fatty acids and polyfunctional acids, soaps such as calcium stearate, zinc stearate, and lead stearate, fatty acid amides such as stearamide, oleamide, and ethylene bis stearamide, and paraffin oils. The lubricant component usually contains at least two lubricants. The preferred lubricants include a mixture of a monofatty acid esters of varying molecular weight alcohols and acids that is marketed as Loxiol G-30 by Henkel International GmbH, a polyfunctional complex ester of saturated fatty acids that is marketed as Loxiol G-70, esterified montan wax that is marketed as Wax E by Hoechst GmbH, low molecular weight paraffin oils, calcium stearate, and mixtures thereof.

Plasticizers and processing aids are incorporated into the molding compositions to improve their processing and molding characteristics. Suitable plasticizers included chlorinated paraffin waxes, glyceryl tribenzoate, epoxidized soybean oil, phthalate esters, and the like. The compositions generally contain one or more processing aids such as vinyl chloride terpolymers and polymethylmethacrylate polymers. The preferred processing aids are low molecular weight acrylic resins that are available commercially as Acryloid K-125, Acryloid K-147, and Acryloid K-175 from Rohm & Haas Co.

The conductive molding compositions can be prepared by any convenient and suitable procedure by which the carbon black, stabilizer component, lubricant component, and plasticizer and processing aid component can be uniformly dispersed in the vinyl chloride copolymer. For example, they can be prepared by blending the ingredients together in a Henschel mixer or other blender and mixing the blend under shear in a Banbury mixer, an extruder, or other suitable apparatus to melt it. The molten compositions are sheeted or extruded and then pelletized. Alternatively, the blended material can be metered directly to a screw injection molding apparatus where it is melted, mixed, and molded in one automated operation.

The invention is further illustrated by the following examples. In these examples, all parts are parts by weight and all percentages are percentages by weight.

Examples 1-4

A. A series of vinyl chloride copolymers was prepared by heating the polymerization systems shown in Table I in a stirred autoclave at 70°C. for 9 to 15 hours. The autoclave was then vented and the copolymers were collected, washed, and dried in a forced air oven at 45°C. overnight.

Table I

| | Ex. 1 | Ex. 2 | Ex. 3 | Ex. 4 |
|---|---|---|---|---|
| Ingredients (parts) | | | | |
| Vinyl chloride | 96.0 | 97.0 | 97.5 | 98.0 |
| Mixture containing 90% octadecene-1 and 10% hexadecene-1 | 4.0 | 3.0 | 2.5 | 2.0 |
| Water (deionized) | 163 | 163 | 163 | 163 |
| Trichloroethylene | - - | 0.45 | 0.97 | 0.97 |
| Hydroxypropyl-methylcellulose | 0.105 | 0.096 | 0.098 | 0.098 |
| Sodium bicarbonate | 0.0095 | 0.0095 | 0.0097 | 0.0097 |
| Di-tert.butyl-p-cresol | 0.016 | 0.021 | 0.016 | 0.021 |
| Lauroyl peroxide | 0.124 | 0.350 | 0.341 | 0.300 |
| Resin Properties | | | | |
| Relative Viscosity | 1.69 | 1.61 | 1.61 | 1.61 |
| Heat Distortion Temp. ( °C.) | 68 | 72 | 64 | 69 |

B. Conductive molding compositions were prepared by mixing 75 parts of each of the copolymers of Examples 1-4 with 15 parts of Ketjenblack EC carbon black, 3 parts of a stabilizer component that contained dibutyltin maleate and dibutyltin mercaptopropionate, 1.5 parts of a lubricant component that contained Loxiol G-30, Loxiol G-70, and calcium stearate, and 5.5 parts of a plasticizer and processing aid component that contained a primary phthalate ester plasticizer (Santicizer 711), Acryloid K-147, and Acryloid K-175 in a Henschel mixer until a homogeneous molten composition was obtained. The mixture was cooled and fed to a plasticating extruder to form a pelletized composition.

For comparative purposes, compositions were prepared in which the copolymers of Examples 1-4 were replaced by a vinyl chloride homopolymer or by a vinyl chloride copolymer that contained 1% of ethylene.

C. Sixty parts of each of the conductive molding compositions was worked in a Brabender Plasticorder No. 6 Head at 177°C. at a rotor speed of 100 rpm. When the compositions had fused, equilibrium torque was determined and heat stability time was taken when the torque had risen 50 meter grams higher than the equilibrium value. The results obtained are set forth in Table II.

Table II

| Ex. No. | Vinyl Halide Resin | Equil. Torque (m/gm/sec) | Melt Viscosity at 180°C. (poises x 10 [7]) | Heat Stability (Min.) |
|---|---|---|---|---|
| C-1 | Product of Ex. 1 | 1660 | 1.09 | 14.0 |
| C-2 | Product of Ex. 2 | 1700 | 1.04 | 14.5 |
| C-3 | Product of Ex. 3 | 1400 | 1.02 | 14.5 |
| C-4 | Product of Ex. 4 | 1300 | 1.12 | 14.0 |
| Comp. Ex. A | Vinyl chloride homopolymer (Geon's 110 x 346) | 1675 | 2.19 | 11.0 |
| Comp. Ex. B | Vinyl chloride—ethylene copolymer (Nissan's E-430) | 1530 | 1.05 | 12.0 |

*refused*   *accepted.*   *accepted.*

Each of the other vinyl chloride-long chain α-olefin copolymers disclosed herein can be used in a similar manner in the production of conductive molding compositions.

CLAIMS

1. A conductive moulding composition which comprises a vinyl halide resin, sufficient finely-divided conductive carbon black particles for the composition to have a bulk resistivity below 500 ohm——cm at 900 megahertz, a stabilizer component, a lubricant component and a plasticizer and processing aid component, characterized in that the vinyl halide resin is a vinyl chloride—α-olefin copolymer containing as comonomer 0.1% to 5% by weight of an α-olefin having 10 to 22 carbon atoms.

2. A conductive moulding composition as claimed in claim 1, wherein the vinyl halide resin is a copolymer of vinyl chloride and an α-olefin having 16 to 18 carbon atoms.

3. A conductive moulding composition as claimed in claim 2, wherein the vinyl halide resin is a copolymer of vinyl chloride and octadecene-1.

4. A conductive moulding composition as claimed in claim 1, 2 or 3, wherein the vinyl chloride copolymer contains 1% to 4% by weight of the α-olefin.

5. A conductive moulding composition as claimed in any preceding claim, which comprises the vinyl chloride copolymer, 12% to 20% by weight of carbon black particles, 1.5% to 4% by weight of the stabilizer component, 0.5% to 5% by weight of the lubricant component, and up to 10% by weight of the plasticizer and processing aid component.

| | DOCUMENTS CONSIDERED TO BE RELEVANT | | EP 81304812.1 |
|---|---|---|---|

| Category | Citation of document with indication where appropriate, of relevant passages | Relevant to claim | CLASSIFICATION OF THE APPLICATION (Int. Cl. ³) |
|---|---|---|---|
| X | <u>DE - B2 - 1 795 333</u> (TENNECO)  * Column 2, lines 16-49; column 3, lines 10-19 * | 1-5 | C 08 L 27/06  C 08 K 3/04  H 01 B 1/24//  G 11 B 3/70 |
| D | & US-A-3 560 462 | | |
| Y | <u>US - A - 3 386 001</u> (BILTRITE)  * Abstract; column 4, lines 9-28 * | 1-5 | |
| A | <u>GB - A - 2 039 933</u> (RCA)  * Page 1, lines 5-11; example 1; claims * | 1-5 | |
| D | & US-A-4 228 050 | | |

| TECHNICAL FIELDS SEARCHED (Int. Cl. ³) |
|---|
| C 08 L 27/00  C 08 K 3/00  H 01 B 1/00  G 11 B  E 04 F 15/00 |

The present search report has been drawn up for all claims

| Place of search | Date of completion of the search | Examiner |
|---|---|---|
| VIENNA | 01-12-1982 | KUTZELNIGG |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document